Europäisches Patentamt

European Patent Office

Office européen des brevets

(19)

(11) **EP 0 643 508 B1**

(12) **FASCICULE DE BREVET EUROPEEN**

(45) Date de publication et mention
de la délivrance du brevet:
**12.11.2003 Bulletin 2003/46**

(51) Int Cl.⁷: **H04L 1/12**, H04L 27/18

(21) Numéro de dépôt: **94402017.1**

(22) Date de dépôt: **09.09.1994**

(54) **Procédé et dispositif de régulation du débit d'information d'une liaison radio électrique**

Verfahren und Vorrichtung zur Einstellung der Datenübertragungsrate einer
Funkübertragungsverbindung

Method and apparatus for data transmission rate adjustment in a radio data link

(84) Etats contractants désignés:
**BE DE GB IT**

(30) Priorité: **13.09.1993 FR 9310878**

(43) Date de publication de la demande:
**15.03.1995 Bulletin 1995/11**

(73) Titulaire: **Thales**
**75008 Paris (FR)**

(72) Inventeurs:
• **Pittet, Patrick**
**B.P. 329, F-92402 Courbevoie Cédex (FR)**
• **Pirez, Didier**
**B.P. 329, F-92402 Courbevoie Cédex (FR)**

(56) Documents cités:
**EP-A- 0 039 191**    **US-A- 4 589 111**

• **BELL SYSTEM TECHNICAL JOURNAL, vol.62,
no.2, Février 1983, NEW YORK US pages 429 -
456 G. J. FOSCHINI / J. SALZ: 'Digital
Communications Over Fading Radio Channels.'**
• **IEEE JOURNAL ON SELECTED AREAS IN
COMMUNICATION., vol.5, no.2, Février 1987,
NEW YORK US pages 162 - 175 D. DIVSALAR /
M. K. SIMON: 'Trellis Coded Modulation for
4800-9600 bits/s Transmission Over a Fading
Mobile Satellite Channel.'**
• **IEEE JOURNAL ON SELECTED AREAS IN
COMMUNICATION., vol.7, no.9, Décembre 1989,
NEW YORK US pages 1356 - 1368, XP101032 C.
SCHLEGEL / D. J. COSTELLO: 'Bandwidth
Efficient Coding for Fading Channels: Code
Construction and Performance Analysis.'**
• **MILCOM '91. MILITARY COMMUNICATIONS IN A
CHANGING WORLD, CONFERENCE RECORD,
04.-07.11.1991, MCLEAN, US, vol.3, 4 Novembre
1991, IEEE, NEW YORK, US pages 938 - 942,
XP273837 J.M. JACOBSMEYER: 'Adaptive Data
Rate Communications for High Frequency Radio
Channels.'**
• **NAVY TECHNICAL DISCLOSURE BULLETIN,
vol.10, no.1, Septembre 1984, ARLINGTON US
pages 69 - 74 W. P. BIRKEMEIER / J. A. WEITZEN:
'Digital Modem for Meteor Scatter Channel.'**

**Description**

La présente invention concerne un procédé et un dispositif de régulation du débit d'information d'une liaison radioélectrique. Elle s'applique notamment aux liaisons HF ionosphériques.

Les conditions de propagation sur canal HF ionosphérique évoluent rapidement. De ce fait pour optimiser les liaisons sur ce type de canal, c'est-à-dire assurer le meilleur débit d'information possible pour les conditions de propagation rencontrées, il est nécessaire de développer des procédures de changement de débit en cours de liaison pour adapter le débit aux conditions de propagation.

De nombreux travaux ont été réalisés récemment pour rendre les systèmes de transmission HF adaptatifs. Cette adaptivité peut être réalisée à différents niveaux : adaptivité en fréquence en recherchant un canal libre, en changeant de canal en cours de liaison ; adaptivité en débit en choisissant le niveau optimal de protection des informations.

La plupart des systèmes d'adaptation en débit estiment le rapport signal à bruit de transmission.

Ce rapport peut dès lors être exploité pour décider d'éventuels changements de débits. Cette exploitation peut se faire de nombreuses manières différentes. La plus simple est de déterminer des plages de rapport signal à bruit correspondant aux différents schémas de codage utilisés. Le choix des plages est défini en fonction du taux d'erreurs binaires admissible en sortie. Ces plages sont construites à partir des courbes de performance des différents schémas de codage, pour un type de canal donné. Mais le fait que les performances du codage soient établies pour un modèle de canal constitue une des limitations de ce système. C'est pourquoi des procédures plus élaborées ont été développées pour adapter le débit par estimation du taux d'erreurs binaires en ligne. La décision de changement de débit peut alors être faite au vu de cette estimation et du taux d'erreurs binaires admissible. L'article de M. SCHOLZ ayant pour titre "Trial results of a novel error rate monitor scheme over a skywaer HF link" publié dans IEEE Electronics Letters vol. 27, n° 1909-1991 pp. 1730-1732 décrit une telle procédure.

Pour un type de modulation donné, le plan complexe est séparé en secteurs de décision, ces secteurs étant angulaires dans le cas d'une modulation MPSK. Un histogramme qui donne, pour chaque secteur , le nombre de symboles reçus tombés dans ce secteur, est constitué. Cet histogramme est comparé, par corrélation, à un certain nombre d'histogrammes de référence, chaque histogramme de référence correspondant à un type de canal donné et à un rapport signal à bruit.

Cette procédure donne une estimée non biaisée du taux d'erreurs même avec un faible nombre de symboles, mais elle oblige à constituer une base de données avec un grand nombre d'histogrammes de référence. De plus, l'adaptation de la procédure aux modulations codées hauts débits n'est pas évidente.

Dans les procédures connues sous l'abréviation anglo-saxonne ARQ de "Automatic Repeat reQuest" qui permettent aussi d'effectuer une adaptivité en débit il est distingué généralement entre la procédure ARQ "simple" et la procédure ARQ "optimisée". La procédure ARQ "simple" est gouvernée par un code externe qui possède à la fois des capacités de correction et de détection d'erreurs en utilisant des codes Reed-Solomon par exemple. L'adaptation en débit est intrinsèque à la méthode du fait du taux de répétition en fonction des conditions de propagation rencontrées. Cependant le débit équivalent obtenu est assez éloigné du débit optimal. La procédure ARQ "optimisée" est optimisée par l'emploi d'un code interne compatible en débit utilisant des codes poinçonnés compatibles en débit. Seule une redondance supplémentaire est transmise plutôt qu'une répétition de toute l'information. Cette procédure nécessite une gestion élaborée de la mémoire et des liaisons retours très protégées et permet d'approcher le débit optimal pour des liaisons moyen débit mais reste inadaptée aux liaisons haut débit.

Pour la conception des codes et l'évaluation de leurs performances a priori, il est connu de déterminer le débit critique par intégration des bornes de Chernoff sur les densités de probabilité du bruit et du canal. Ces méthodes d'intégration sont notamment connues des articles

DIVSALAR-SIMON "Treillis coded modulation for 4800-9600 bits/s transmission over a fading satellite channel" IEEE JSA in Communications vol. n°202 6 1987 pp. 162-175,

DIVSALAR-SIMON "The design of treillis coded MPSK for fading channels performance criteria" IEEE Tr. on Communications vol. 36, n° 909 - 1988 pp. 1004-1012,

SCHLEGEL-COSTELLO "Bandwith efficient coding for fading channels ; code construction and performance analysis" IEEE JSA in Communications vol. 7 n° 912-1989 pp. 1356-1368.

BELL SYSTEM TECHNICAL JOURNAL, vol. 62, n° 2, février 1983, NEW YORK, USA, pages 429-456, G.J. FOSCHINI/J.SALZ : "Digital Communications Over Fading Radio Channels".

Cependant, comme pour une liaison HF ionosphérique la statistique du canal ne peut être connue, les méthodes d'intégration précédentes s'avèrent insuffisantes pour estimer le débit critique d'une liaison.

Le but de l'invention est de palier les inconvénients précités.

A cet effet, l'invention a pour objet un procédé de régulation du débit d'information d'une liaison radioélectrique par calcul du facteur de Chernoff, caractérisé en ce qu'il consiste à calculer le facteur de Chernoff par intégration des bornes de Chernoff successivement sur la loi de probabilité gaussienne, associé au bruit thermique et par intégration temporelle du résultat de l'intégration précédente et à estimer le débit critique de la valeur du facteur de Chernoff ainsi calculé.

Elle a également pour objet un dispositif pour la mise en oeuvre du procédé.

L'invention a pour principal avantage qu'elle permet grâce à la détermination du débit critique de déterminer le débit maximal possible sur une liaison en fonction des propriétés statistiques du canal et du rapport signal à bruit, le tout pour une constellation donnée d'états de modulation. Elle permet également de définir le nombre maximal de bits d'information qu'il est possible de véhiculer par symbole de modulation pour qu'il n'y ait pas d'erreur en réception (sous hypothèse de codage optimal). Comme le débit critique donne un débit limite pour des conditions de canal et une modulation données, l'invention permet de choisir "à chaque instant", parmi la palette de codages disponibles, le schéma de codage le mieux adapté aux conditions de propagation ce qui donne de fait l'adaptation en débit recherchée.

D'autres caractéristiques et avantages de l'invention apparaîtront dans la description qui suit, faite en regard des figures annexées qui représentent :

- La figure 1 un système de transmission d'information sur canal HF mettant en oeuvre le procédé selon l'invention.

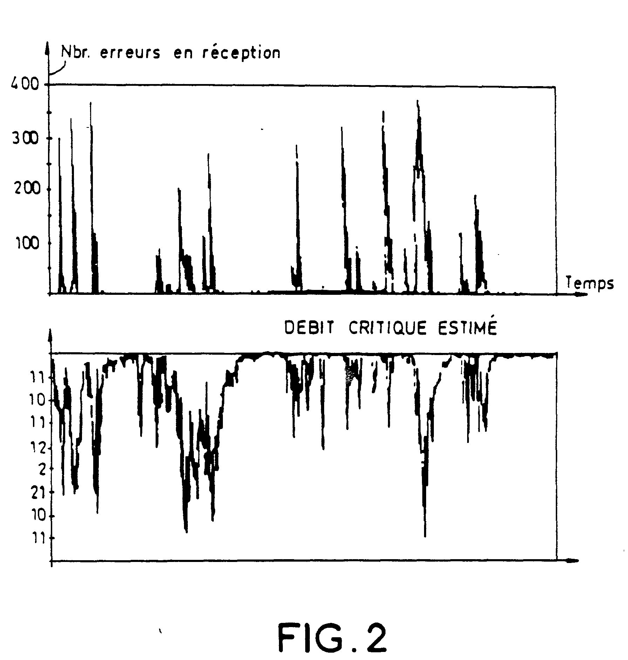

- La figure 2 présente des exemples où la valeur du critère estimé selon l'invention est mis en parallèle avec le nombre d'erreurs obtenues en cours de liaison.

Pour la conception de codes, le débit critique est calculé selon l'invention par intégration des bornes de Chernoff sur les densités de probabilité du bruit et du canal, mais au lieu d'intégrer le facteur de Chernoff sur la loi de probabilité gaussienne ou sur la loi de Rayleigh, comme cela est décrit dans les articles précédemment cités, le facteur de Chernoff est approximé par intégration sur la loi de probabilité gaussienne correspondant au bruit thermique et par remplacement de l'intégration sur la loi de probabilité correspondant aux évanouissements par une intégration temporelle.

Le facteur de Chernoff est défini par la quantité

$$C(x_i, x'_i, \mu) = E_{y/x}\left\{\text{Exp}\left(-\mu\left(m(x'_i, y_i)\right) - m(x_i, y_i)\right)\right\} \quad (1)$$

dans laquelle :

$x_i$, $x'_i$ sont les symboles de la constellation d'états de la modulation
$y_i$ le symbole reçu par le récepteur
$\mu$ le paramètre d'optimisation
$m()$ : métrique
$E_{y/x}\{\}$ l'espérance mathématique conditionnelle.

Pour une constellation à M états le débit critique s'écrit :

$$R_0 = -\log_2\left(\min \mu \sum_{i=1}^{M}\sum_{j=1}^{M} p(x_i)p(x_j)C(x_i, y_j, \mu)\right) \quad (2)$$

où $p(x_i)$ est la probabilité associée à l'état $x_i$.

Par intégration du facteur de Chernoff sur la loi de probabilité gaussienne :

- la valeur optimale du paramètre $\mu$ est :

$$\mu_0 = \frac{1}{4\sigma^2} \quad (3)$$

- l'expression du facteur de Chernoff est :

$$C\left(x_i, x_j, \mu_0\right) = e^{\dfrac{-a_i^2}{8\tau^2}\left(x_i - x_j\right)^2} \qquad (4)$$

- l'expression du débit critique est :

$$R_0 = \log_2\left(\dfrac{1}{M^2}\sum_{i=1}^{M}\sum_{j=1}^{M} e^{-\dfrac{E_S}{4N_0}\left(x_i - x_j\right)^2}\right) \qquad (5)$$

Dans le cas d'une modulation de phase MPSK, $R_0$ s'écrit encore

$$R_0 = -\log_2\left(\dfrac{1}{M^2}\sum_{i=1}^{M}\sum_{j=1}^{M} e^{-\dfrac{E_S}{N_0}\left(\sin\left(\dfrac{2\pi\left(K_i - K_j\right)}{M}\right)\right)^2}\right) \qquad (6)$$

Dans le cas d'un canal diffus, les lois qui régissent les variables aléatoires associées au bruit additif (loi gaussienne) et aux évanouissements (loi de Rayleigh) sont supposées indépendantes.

L'espérance mathématique est calculée par intégration successive sur les deux lois de probabilité.

L'intégration sur la loi gaussienne est identique au cas précédent. La valeur trouvée précédemment est alors intégrée sur la loi de Rayleigh, ce qui donne les résultats suivants :

$$\mu_0 = \dfrac{1}{4\sigma^2} \qquad (7)$$

$$C\left(x_i, x_j, \mu_0\right) = \dfrac{1}{1 + \dfrac{1}{8\sigma^2}\left(x_i - x_j\right)^2} \qquad (8)$$

$$R_0 = -\log_2\left(\dfrac{1}{M^2}\sum_{i=1}^{M}\sum_{j=1}^{M} \dfrac{1}{1 + \dfrac{E_S}{4N_0}\left(x_i - x_j\right)^2}\right) \qquad (9)$$

Dans le cas d'une modulation MPSK, $R_0$ s'écrit encore

$$R_0 = -\log_2\left(\frac{1}{M^2}\sum_{i=1}^{M}\sum_{j=1}^{M}\frac{1}{1+\dfrac{E_S}{N_0}\left(\sin\dfrac{2\pi(K_i-K_j)}{M}\right)^2}\right) \qquad (10)$$

Dans la pratique si, en première approximation, il est possible d'assimiler le bruit thermique à un bruit blanc gaussien, en revanche la loi de variation de gain du canal ne peut être approximée par une loi de Rayleigh, car cette modélisation devrait prendre en compte le fait que le canal n'est pas sans mémoire. C'est pourquoi selon l'invention l'approximation du calcul du facteur de Chernoff a lieu par intégration sur la loi de probabilité gaussienne correspondant au bruit thermique et par intégration sur la loi de probabilité correspondant aux évanouissements remplacée par une intégration temporelle (ergodicité).

Pour ce faire la valeur de $\mu_0$ des relations (3) et (7) est conservée :

$$\mu_0 = \frac{1}{4\sigma^2} \qquad (11)$$

L'intégration temporelle du coefficient de Chernoff donne :

$$C\left(x_i, x_j, \mu_0\right) = \frac{1}{T}\int_0^T e^{-\left(\frac{E_S}{4N_0}\right)_t (x_i-x_j)^2}\,dt \qquad (12)$$

De là, le débit critique associé devient

$$R_0(\tau) - \log_2\left(\frac{1}{M^2}\sum_{i=1}^{M}\sum_{j=1}^{M}\left(\frac{1}{T}\int_{\tau-\frac{T}{2}}^{\tau+\frac{T}{2}} e^{-\left(\frac{E_S}{4N_0}\right)(x_i-x_j)^2}\,dt\right)\right) \qquad (13)$$

En permutant sommations et intégration

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M} e^{-\left(\frac{E_S}{4N_0}\right)_t (x_i-x_j)^2}\,dt\right)\right) \qquad (14)$$

Dans le cas d'une modulation MPSK

$$R_0(\tau) = -\log_2\left(\frac{1}{M^2}\sum_{i=1}^{M}\sum_{j=1}^{M}\left(\frac{1}{T}\int_{\tau-\frac{T}{2}}^{\tau+\frac{T}{2}} e^{-\left(\frac{E_S}{N_0}\right)\left(\sin\left(\frac{2\pi(K_i-K_j)}{M}\right)\right)^2}\,dt\right)\right) \qquad (15)$$

Soit encore :

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M}e^{-\left(\frac{E_S}{N_0}\right)_t\left(\sin\left(\frac{2\pi(Ki-Kj)}{M}\right)^2\right)}\right)dt\right) \quad (16)$$

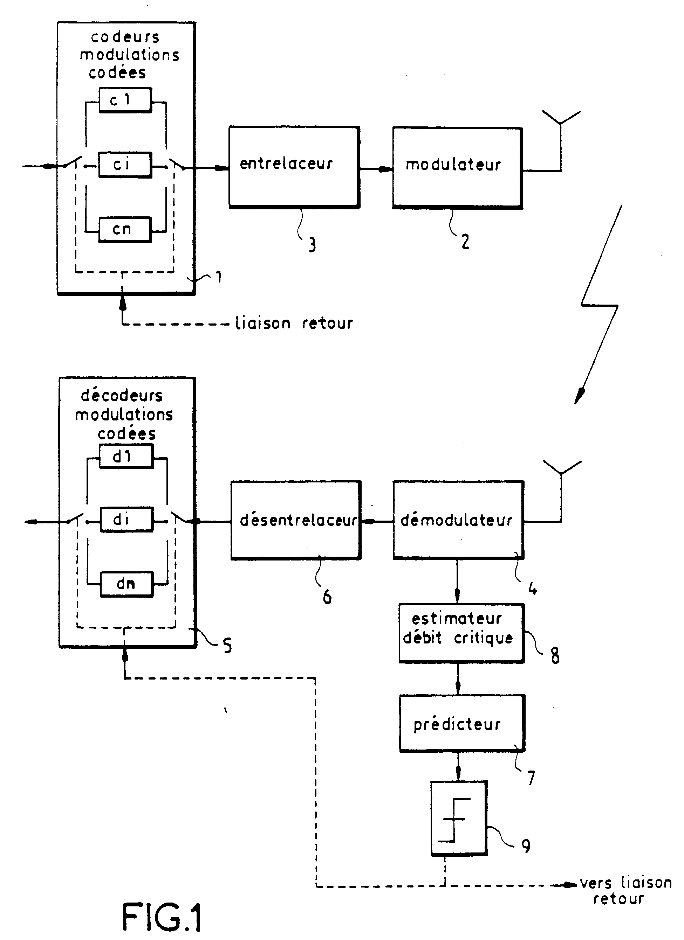

Le critère précédent peut être avantageusement mis en oeuvre dans un dispositif formé par un modem parallèle cohérent associé à des modulations codées en treillis du type représenté sur la figure 1. Un tel type de dispositif comporte dans la partie émission un ensemble 1 de codeurs comportant des codeurs $c_1$ à $c_n$, couplé à un modulateur 2 par l'intermédiaire d'un entrelaceur 3. Côté réception, il comporte un démodulateur 4 couplé à un ensemble 5 de décodeurs comportant des décodeurs d1 à $d_n$, par l'intermédiaire d'un désentrelaceur 6. Le démodulateur est couplé à un prédicteur 7 par l'intermédiaire d'un estimateur de débit critique 8 formé par un processeur ou tout dispositif équivalent programmé pour évaluer le débit selon la relation (16) si la modulation est de type MPSK ou selon la relation (14) pour d'autres types de modulation. Un dispositif à seuil 9 à histérésis est commandé par le prédicteur 7 pour sélectionner le décodeur 5 et le codeur 1 qui correspondent au débit calculé, l'information de sélection des codeurs 1 étant transmise sur une liaison hertzienne de retour à destination de la partie émission. Comme la procédure d'entrelacement utilisée par l'entrelaceur 3 et le désentrelaceur 6 pour lutter contre les trous de "fading" a pour effet de transmettre des symboles consécutifs sur une durée d'entrelacement Tent, la durée d'intégration T pour calculer le débit critique est choisie supérieure ou égale à cette durée. En la prenant égale, le débit critique sera bien adapté au canal rencontré dans le cas où ce dernier varierait rapidement.

Le changement de débit est décidé par le dispositif à seuil 9 par un seuillage sur le débit critique associé à la modulation comptant le plus grand nombre d'états.

Le niveau des seuils est évalué pour éviter les changements de débit intempestifs. Ainsi le seuil pour passer d'un débit $d_1$ à un débit supérieur $d_2$ doit être supérieur à celui utilisé pour passer de $d_2$ à $d_1$.

Dans le cas où une modulation codée est associée à un code externe en bloc, le niveau du seuil doit être réglé en fonction du pouvoir de correction du code externe.

Le prédicteur 7 permet une prédiction du débit critique et, par là, d'anticiper les changements de débit.

Naturellement l'invention, n'est pas limitée au système de transmission haut débit utilisant un modem HF parallèle cohérent et des modulations codées. Elle peut également être utilisée avec tout type de modem (à condition qu'il fournisse une estimation du rapport signal à bruit) et tout type de code.

Si initialement le critère d'adaptivité selon l'invention a été mis au point pour un canal HF ionosphérique, il va de soi qu'il peut être employé sur tout canal diffus, notamment pour des applications de communication par satellites avec des mobiles.

## Revendications

1. Procédé de régulation du débit d'information d'une liaison radioélectrique par calcul du facteur de Chernoff, **caractérisé en ce qu'**il consiste à calculer (8) le facteur de Chernoff par intégration des bornes de Chernoff successivement sur la loi de probabilité gaussienne, associé au bruit thermique et par intégration temporelle du résultat de l'intégration précédente, à estimer le débit critique de la valeur du facteur de Chernoff ainsi calculé, et réguler le débit d'information en fonction du débit critique calculé.

2. Procédé selon la revendication 1 **caractérisé en ce que** le facteur de Chernoff calculé est de la forme

$$C\left(x_i, x_j, \mu_0\right) = \frac{1}{T}\int_0^T e^{-\left(\frac{E_S}{4N_0}\right)_t\left(x_i-x_j\right)^2} dt$$

où $x_i$, $x_j$ désignent les symboles de la modulation
$\mu_0$ est la valeur optimale d'un paramètre d'optimisation
$\frac{E_S}{N_0}$ est le rapport signal à bruit et T est la durée d'intégration.

3. Procédé selon l'une quelconque des revendications 1 et 2, **caractérisé en ce que** le débit critique est calculé par la relation :

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M}e^{-\left(\frac{E_s}{4N_0}\right)_t(x_i-x_j)^2}dt\right)\right)$$

où M désigne le nombre d'états de la modulation.

4. Procédé selon l'une quelconque des revendications 1 et 2, **caractérisé en ce que** pour une modulation MPSK le débit critique est calculé par la relation :

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M}e^{-\left(\frac{E_s}{N_0}\right)_t\left(\sin\left(\frac{2\pi(Ki-Kj)}{M}\right)^2\right)}dt\right)\right)$$

5. Procédé selon l'une quelconque des revendications 1 à 4, **caractérisé en ce qu'**il consiste pour modifier le débit à effectuer un seuillage sur le débit critique calculé associé à la modulation comptant le plus grand nombre d'états.

6. Dispositif de régulation du débit d'information d'une liaison radioélectrique par le calcul du facteur de Chernoff comportant un ensemble (1) de codeurs ($C_1$ à $C_n$) couplé à un modulateur par l'intermédiaire d'un entrelaceur (3) et un ensemble (5) de décodeurs ($d_1$ à $d_n$) couplés à un démodulateur (4) par l'intermédiaire d'un désentrelaceur (6), **caractérisé en ce qu'**il comporte un estimateur de débit critique (8) couplé au démodulateur (4) pour d'une part calculer le facteur de Chernoff par intégration des bornes de Chernoff successivement sur la loi de probabilité gaussienne, associé au bruit thermique et par intégration temporelle du résultat de l'intégration précédente et estimer le débit critique de la valeur du facteur de Chernoff ainsi calculé, et d'autre part, sélectionner en fonction du débit critique estimé, les codeurs ($C_1..C_n$) et décodeurs ($d_1..d_n$) correspondant au débit associé à la plage dans laquelle se trouve le débit critique estimé.

7. Dispositif selon la revendication 6, **caractérisé en ce que** l'estimateur de débit est couplé à un prédicteur (7).

8. Dispositif selon l'une quelconque des revendications 6 et 7, **caractérisé en ce que** la sélection des codeurs est effectuée par voie hertzienne.

**Patentansprüche**

1. Verfahren zur Regelung des Informationsdurchsatzes einer Funkverbindung durch Berechnung des Chernoff-Faktors, **dadurch gekennzeichnet, daß** es darin besteht, den Chernoff-Faktor durch Integration der Chernoff-Grenzen nacheinander über das Gauss'sche Wahrscheinlichkeitsgesetz bezüglich des thermischen Rauschens und durch zeitliche Integration des vorhergehenden Integrationsergebnisses zu berechnen (8) und den kritischen Durchsatz aus dem so berechneten Chernoff-Faktor zu schätzen sowie den Informationsdurchsatz abhängig vom berechneten kritischen Durchsatz zu regeln.

2. Verfahren nach Anspruch 1, **dadurch gekennzeichnet, daß** der berechnete Chernoff-Faktor folgende Form hat:

$$C\left(x_i, x_j, \mu_0\right) = \frac{1}{T} \int_0^T e^{-\left(\frac{E_s}{4N_0}\right)_t (x_i - x_j)^2} dt$$

wobei gilt:

x$_i$, x$_j$ bezeichnen die Symbole der Modulation;
$\mu_0$ ist der optimale Wert eines Optimierungsparameters;
$E_s/N_0$ ist das Signal/Rauschverhältnis;
T ist die Dauer der Integration.

3. Verfahren nach einem beliebigen der Ansprüche 1 und 2, **dadurch gekennzeichnet, daß** der kritische Durchsatz aus folgender Beziehung berechnet wird:

$$R_0(\tau) = -\log_2\left(\frac{1}{T} \int_{\tau-\frac{T}{2}}^{\tau+\frac{T}{2}} \left(\frac{1}{M^2} \sum_{i=1}^{M} \sum_{j=1}^{M} e^{-\left(\frac{E_s}{4N_0}\right)_t (x_i - x_j)^2} dt\right)\right)$$

wobei M die Anzahl der Modulationszustände bezeichnet.

4. Verfahren nach einem beliebigen der Ansprüche 1 und 2, **dadurch gekennzeichnet, daß** für eine MPSK-Modulation der kritische Durchsatz durch die folgende Beziehung berechnet wird:

$$R_0(\tau) = -\log_2\left(\frac{1}{T} \int_{\tau-\frac{T}{2}}^{\tau+\frac{T}{2}} \left(\frac{1}{M^2} \sum_{i=1}^{M} \sum_{j=1}^{M} e^{-\left(\frac{E_s}{N_0}\right)_t \left(\sin\left(\frac{2\pi(Ki-Kj)}{M}\right)^2\right)} dt\right)\right)$$

5. Verfahren nach einem beliebigen der Ansprüche 1 bis 4, **dadurch gekennzeichnet, daß** es darin besteht, für die durchzuführende Veränderung des Durchsatzes eine Schwellenbildung bezüglich des berechneten kritischen Durchsatzes durchzuführen, der der Modulation mit der größten Anzahl von Zuständen zugeordnet ist.

6. Vorrichtung zur Regelung des Informationsdurchsatzes in einer Funkverbindung durch Berechnung des Chernoff-Faktors, mit einer Gruppe (1) von Kodierern (c$_1$ bis c$_n$), die an einen Modulator über ein Verflechtungsorgan (3) gekoppelt ist, und einer Gruppe (5) von Dekodern (d$_1$ bis d$_n$), die an einen Demodulator (4) über ein Entflechtungsorgan (6) gekoppelt sind, **dadurch gekennzeichnet, daß** sie ein Schätzorgan (8) für den kritischen Durchsatz enthält, das an den Demodulator (4) gekoppelt ist, um einerseits den Chernoff-Faktor durch Integration der Chernoff-Grenzen nacheinander über das Gauss'sche Wahrscheinlichkeitsgesetz bezüglich des thermischen Rauschens und durch zeitliche Integration des vorhergehenden Integrationsresultats zu berechnen und den kritischen Durchsatz aus dem Wert des so berechneten Chernoff-Faktors zu schätzen, und um andrerseits abhängig von dem geschätzten kritischen Durchsatz die Kodierer (c$_1$ bis c$_n$) und Dekoder (d$_1$ bis d$_n$) entsprechend dem Durchsatz auszuwählen, der dem Bereich zugeordnet ist, in dem sich der geschätzte kritische Durchsatz befindet.

7. Vorrichtung nach Anspruch 6, **dadurch gekennzeichnet, daß** das Schätzorgan für den Durchsatz an ein Vorhersageorgan (7) gekoppelt ist.

8. Vorrichtung nach einem beliebigen der Ansprüche 6 und 7, **dadurch gekennzeichnet, daß** die Auswahl der Kodierer über einen Funkkanal erfolgt.

**Claims**

1. Process for regulating the information throughput of a radio link by calculating the Chernoff factor, **characterized in that** it consists in calculating (8) the Chernoff factor, associated with thermal noise, by integration of the Chernoff bounds successively over the Gaussian probability law and by temporal integration of the result of the previous integration, in estimating the critical throughput of the value of the thus-calculated Chernoff factor, and regulating the information throughput as a function of the critical throughput calculated.

2. Process according to Claim 1, **characterized in that** the calculated Chernoff factor is of the form

$$C\left(x_i, x_j, \mu_0\right) = \frac{1}{T}\int_0^T e^{-\left(\frac{E_s}{4N_0}\right)_t (x_i - x_j)^2} dt$$

where $x_i$, $x_j$ denote the symbols of the modulation
$\mu_0$ is the optimal value of an optimization parameter
$\frac{E_s}{N_0}$ is the signal-to-noise ratio
and T is the duration of integration.

3. Process according to either of Claims 1 or 2, **characterized in that** the critical throughput is calculated via the relation:

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M} e^{-\left(\frac{E_s}{4N_0}\right)_t (x_i - x_j)^2} dt\right)\right)$$

where M denotes the number of states of the modulation.

4. Process according to either of Claims 1 or 2, **characterized in that** for an MPSK modulation the critical throughput is calculated via the relation:

$$R_0(\tau) = -\log_2\left(\frac{1}{T}\int_{\tau-\frac{T}{2}}^{\tau+\frac{T}{2}}\left(\frac{1}{M^2}\sum_{i=1}^{M}\sum_{j=1}^{M} e^{-\left(\frac{E_s}{N_0}\right)_t \left(\sin\left(\frac{2\pi(Ki-Kj)}{M}\right)^2\right)} dt\right)\right)$$

5. Process according to any one of Claims 1 to 4, **characterized in that** in order to modify the throughput it consists in performing a thresholding on the calculated critical throughput associated with the modulation exhibiting the largest number of states.

6. Device for regulating the information throughput of a radio link by calculating the Chernoff factor comprising a set (1) of coders ($C_1$ to $C_n$) coupled to a modulator by way of an interleaver (3) and a set (5) of decoders ($d_1$ to $d_n$) coupled to a demodulator (4) by way of a deinterleaver (6), **characterized in that** it comprises a critical throughput estimator (8) coupled to the demodulator (4) so as on the one hand to calculate the Chernoff factor, associated with thermal noise, by integration of the Chernoff bounds successively over the Gaussian probability law and by temporal integration of the result of the previous integration and to estimate the critical throughput of the value of the thus-calculated Chernoff factor, and on the other hand, to select as a function of the estimated critical throughput, the coders ($C_1..C_n$) and decoders ($d_1..d_n$) corresponding to the throughput associated with the span within which the estimated critical throughput lies.

7. Device according to Claim 6, **characterized in that** the throughput estimator is coupled to a predictor (7).

8. Device according to either of Claims 6 or 7, **characterized in that** the selection of the coders is performed over the airwaves.

codeurs
modulations
codées

c 1

c i

c n

1

entrelaceur

3

modulateur

2

liaison retour

décodeurs
modulations
codées

d 1

d i

d n

5

désentrelaceur

6

démodulateur

4

estimateur
débit critique

8

prédicteur

7

9

vers liaison
retour

FIG.1

FIG. 2